# EUROPÄISCHE PATENTSCHRIFT

(11) **EP 3 414 992 B1**
(45) Veröffentlichungstag und Bekanntmachung des Hinweises auf die Patenterteilung: **19.08.2020**
(21) Anmeldenummer: 18000512.6
(22) Anmeldetag: 12.06.2018
(51) Int. Cl.: A01F 15/14, A01B 71/08, A01F 15/08

(54) **LANDWIRTSCHAFTLICHE GROSSPACKENPRESSE**
AGRICULTURAL LARGE PACKING PRESS
PRESSE À GROSSES BALLES AGRICOLE

(30) Priorität: 14.06.2017 DE 102017005668
(43) Veröffentlichungstag der Anmeldung: 19.12.2018
(73) Patentinhaber: Maschinenfabrik Bernard Krone GmbH & Co. KG, 48480 Spelle (DE)
(72) Erfinder: Oskamp, Tobias, 48607 Ochtrup (DE)

(56) Entgegenhaltungen:
- EP-A1- 2 289 305
- EP-A1- 2 709 432
- EP-A1- 2 760 271
- US-B1- 7 318 376

## Beschreibung

Die Erfindung betrifft eine landwirtschaftliche Großpackenpresse zur Verdichtung von auf dem Feldboden befindlichem Erntematerial wie Stroh, Heu oder dergleichen, welche einen Luftstromerzeuger zur Reinigung wenigstens der Bindeeinheit nach dem Oberbegriff des Anspruchs 1 aufweist.

In der Landwirtschaft sind Großpackenpressen, auch als Quader-, Vierkant- oder Großballenpressen bezeichnet, seit geraumer Zeit bekannt und werden in zahlreichen Varianten eingesetzt. Zu den großen Vorteilen dieser Landmaschinen zählen unter anderem die kontinuierliche Pressarbelt, eine In der Regel hohe Pressdichte und die gute Lagerbarkeit der gefertigten Erntegutballen. Dazu sammeln diese Maschinen zunächst auf dem Feld liegendes Erntegut mit Hilfe einer Aufnahmevorrichtung, landläufig als Pick-Up bekannt, auf. Im Anschluss daran wird das Erntegut von einer Fördereinrichtung übernommen, beispielsweise einem Förderrotor und/oder einer Raffereinheit. Diese fördert das Erntegut in einen zum Presskanal führenden Förderkanal. Sobald der Presskolben weit genug zurückgefahren wurde, wird das gesammelte Erntegut in die Presskammer befördert, wo es durch den Presskolben zu einem Erntegutballen, auch als Quaderballen, Großpacken oder Vierkantballen bezeichnet, verdichtet wird. Damit die Großpacken nach Ihrem Ausstoß aus dem Presskanal ihre Form behalten, werden sie mit Bindematerial umschlungen.

Um die Erntegutballen zu umreifen muss ein Bindematerial um den Ballen geführt werden. Aktuell wird besonders (synthetisches) Garn eingesetzt. Aber auch andere Bindematerialien sind bekannt oder werden getestet. In jedem Fall wird eine Bindeeinheit eingesetzt, um das genutzte Bindematerial nach dem Umschlingen des gepressten Erntegutballen miteinander zu verbinden. Im Stand der Technik werden hierzu verschiedenartige Bindeeinheiten eingesetzt. Die aktuell am häufigsten eingesetzte Bindeeinrichtung stellen dabei die sogenannten Knoter dar. Je nach eingesetzter Ausführung kommt es dabei vor, dass Bindematerialreste nach dem Bindevorgang entstehen.

Weiterhin werden beim Pressen von Erntegutballen Staub, Erntegutreste und Schmutz aufgewirbelt. Dadurch lässt sich schnell auf eine bekannte Problematik von Bindeeinheiten schließen. Die Verbindung von Bindematerialsträngen ist eine verhältnismäßig filigrane Tätigkeit, welche in wenigen Sekunden ausgeführt werden muss. Unerwünschte Materialien in der Nähe der Bindeeinheit können daher zu einer Beeinträchtigung des Betriebsablaufs führen. Verstaubte, verdreckte oder anderweitig blockierte Bindeeinheiten können zu erhöhtem Verschließ an den Elementen der Bindeeinheit und/oder Fehlfunktionen führen. Möglicherweise kann die Verbindung des Bindematerials nicht oder nicht ordnungsgemäß ausgeführt werden. Schäden an der Bindeeinheit, ungebundene oder aufplatzende Erntegutballen, aber auch die Beschädigung anderer Maschinenelemente bis hin zum Maschinenausfall sind die Folge.

Um die Einsatzzeit von Großpackenpressen relativ einfach zu verlängern werden Im Stand der Technik spätestens seit der US 3,020,829 Gebläse eingesetzt, um Fehlfunktionen an Bindeeinheiten zu vermeiden. Dabei werden In der Regel Radiallüfter eingesetzt, um einen Luftstrom zu erzeugen. Mit dem erzeugten Luftstrom soll dann die Bindeeinheit der dazugehörigen Großpackenpresse von Fremdkörpern befreit werden. Dadurch kann ein fehlerarmer und wartungsarmer Betrieb der Bindeeinheit erreicht werden.

Besonders sind zunächst Druckluftgebläse eingesetzt worden, um Bindeeinhelten vor jedem Bindevorgang möglichst zuverlässig zu reinigen. Diese Einrichtungen sind in den letzten Jahren vermehrt durch kontinuierlich arbeitende Gebläse ersetzt worden. Durch den Einsatz kontinuierlich arbeitender Gebläse können die Bindeeinheiten durchgehend relativ frei von Fremdkörpern gehalten werden, bei ähnlichem Energieaufwand. Sinnvollerweise werden zur einfachen Säuberung der Bindeeinrichtungen die Luftstromerzeuger direkt vor oder hinter einer Bindeeinrichtung angeordnet. Von diesen Positionen aus wird der Luftstrom etwa parallel zum Erdboden in oder entgegen der Fahrtrichtung ausgerichtet. Dabei kann zwar die Bindeeinrichtung von unerwünschtem Material befreit werden. Allerdings werden andere Maschinenelemente oder möglicherweise die gefertigten Erntegutballen durch unerwünschtes Material beeinträchtigt.

Die Druckschrift EP 2 760 271 B1 offenbart eine Ballenpresse zum Bündeln von faserigem Material, die ein Reinigungssystem zum Entfernen von Schmutz aus der Ballenpresse an einer Vielzahl von Stellen umfasst, wobei das Reinigungssystem ein Luftgebläse, ein Leitungssystem mit einem Einlass und einer Vielzahl von Auslässen zum Zuführen von Luft von dem Gebläse zu der Vielzahl von Stellen, und einen Luftstromsteuermechanismus zum Steuern der Zuführung von Luft von dem Einlass zu der Vielzahl von Auslässen umfasst, wobei der Luftstromsteuermechanismus konfiguriert ist, um die Luft abwechselnd zu einem oder mehreren der Auslässe zuzuführen.

Aufgabe der Erfindung ist es folglich, eine landwirtschaftliche Großpackenpresse anzubieten, welche einen Luftstromerzeuger aufweist, der den Stand der Technik sinnvoll erweitert und verbessert, indem ein Bereich der landwirtschaftlichen Großpackenpresse, welcher zumindest eine Bindeeinheit aufweist, kostengünstig, zuverlässig und annähernd ununterbrochen zumindest größtenteils frei von unerwünschtem Material hält.

Die Aufgabe wird durch eine landwirtschaftliche Großpackenpresse gemäß den Merkmalen des Anspruchs 1 gelöst, wobei vorteilhafte Weiterbildungen aus den weiteren Patentansprüchen und den Ausführungsbeispielen hervorgehen. In den folgenden Ausführungsbeispielen und Beschreibungen sind Angaben wie "oben", "unten", "links", "rechts", "vorne" und "hinten" bezogen auf eine landwirtschaftliche Großpackenpresse mit der Zugdeichsel in Fahrtrichtung weisend zu verstehen.

Die erfindungsgemäße, landwirtschaftliche Großpackenpresse Ist ausgestattet mit einem Fahrwerk zum Abstützen der Großpackenpresse auf dem Feldboden, einer Aufnahmevorrichtung zum Bergen von auf dem Feldboden liegendem Erntegut, einem Förderkanal mit wenigstens einer Fördereinrichtung zur Beförderung des geborgenen Ernteguts in einen Presskanal, in welchem ein hin und her beweglich angetriebener Presskolben dazu ausgelegt ist, das Erntegut zu einem Erntegutballen zu verdichten, mit wenigstens einer dem Presskanal zugeordneten Bindeeinheit zur Umreifung des Erntegutballens mit Bindematerial, sowie wenigstens einem Luftstromerzeuger zur Reinigung der Bindeeinheit, wobei der Luftstromerzeuger derart ausgelegt ist, den bewirkten Luftstrom über den Bereich der Bindeeinheit hinaus zumindest auf den Übergabebereich zwischen Förderkanal und Presskanal zu richten.

Die Großpackenpresse zeichnet sich dadurch aus, dass der Luftstromerzeuger einem Gehäuse zugeordnet ist, dass dazu ausgelegt ist, die Bindeeinheit wenigstens teilweise von der Umgebung abzuschirmen, wobei ein Teil des Luftstroms durch Aussparungen für die Bindematerialübergabe In den Presskanal gelangt. Als besonders sinnvoll wird dabei eine Ausgestaltung des die Bindeeinheit umgebenden Gehäuses bevorzugt, welches dazu ausgelegt ist, den Luftstromerzeuger selbst aufzunehmen. Der Antrieb des Luftstromerzeugers ist derweil dazu ausgelegt, den Luftstromerzeuger so anzutreiben, dass ein größtenteils kontinuierlicher Luftstrom erzeugt wird.

Sinnvollerweise lässt sich der kontinuierliche Luftstrom auf die aktuellen Umgebungsbedingungen anpassen. Bei besonders trockenen und staubigen Bedingungen kann es nützlich sein, durch eine Erhöhung der Antriebsgeschwindigkeit oder durch Verstellung der Rotorblätter geförderte Volumen des Luftstroms zu variieren. Darüber hinaus wird empfohlen, das Gehäuse bis auf die Lufteinlässe des Luftstromerzeugers und/oder die Luftauslässe des Luftstromerzeugers luftdicht abgedichtet auszuführen. Dadurch kann der Raum zwischen Gehäuse und Presskanal, in welchem sich die Bindeeinheit befindet, mit einem vorteilhaften Überdruck beaufschlagt werden. Dieser Überdruck hilft weiterhin dabei, die Bindeeinheit frei von unerwünschtem Material zu halten. Staub, Erntematerialrest und ähnliche Störkörper können nicht ohne weiteres in den Raum der Bindeeinheit eindringen.

Aufgrund der Ausbildung von Presskanal und Bindeeinrichtung In handelsüblichen landwirtschaftlichen Großpackenpressen sind wenigstens zum Presskanal hin Aussparungen vorgesehen. Diese Aussparungen lassen die Durchgabe des Bindematerials durch die Presskammer an die Bindeeinheit durch die Bindematerialübergabe zu. Da die Bindematerialübergabe und davon geführtes Bindematerial durch den Presskanal geführt wird, besteht die Gefahr, dass Erntegutreste oder ähnliche Fremdkörper und/oder Verschmutzungen In den Raum der Bindeeinrichtung gelangen. Dadurch jedoch, dass der Raum der Bindeeinrichtung größtenteils luftdicht ausgeführt ist, kann ein ausreichend starker Luftstrom erzeugt werden. Durch diesen ausreichend starken Luftstrom kann die Bindematerialübergabe also vor, beziehungsweise beim Eintritt In den Bereich der Bindeeinheit von unerwünschtem Material befreit werden. Die so geschaffene Überdruckkammer dient also als eine Art "Verschluss" für die Bindematerialübergabe.

Eine einfache Ausführung sieht dabei vor, einen Axiallüfter also Luftstromerzeuger einzusetzen. Dieser wird quasi direkt über eine Bindeeinheit in einem für die Bindeeinheit vorgesehenen Gehäuse untergebracht. Die Ausrichtung des Axiallüfters sieht im Optimalfall so aus, dass sowohl die der Rotationsachse des Axiallüfters, die Bindeeinheit, die Aussparung für die Bindematerialübergabe und das Ende des Förderkanals in etwa in einer Ebene liegen. Der als Luftstromerzeuger eingesetzte Axiallüfter erzeugt dabei einen Luftstrom, der ausreichend Volumen enthält, um einen Überdruck innerhalb des Gehäuses der Bindeeinheit zu erzeugen und zu erhalten. Darüber hinaus ist der Luftstrom in der Lage, aus dem Förderkanal In den Presskanal gefördertes Erntegut zu durchströmen. Dadurch können leichte Verunreinigungen des Ernteguts vor dem Verdichten durch den Presskolben verringert werden.

Nachfolgend wird eine bevorzugte Ausführungsform der Erfindung anhand einiger Zeichnungen näher beschrieben. Die Zeichnungen zeigen:
**FIG.1****:** eine perspektivische Ansicht einer landwirtschaftlichen Großpackenpresse ohne einen Großteil der Schutzverkleidung, sodass die Position der Bindeeinheit und des dazugehörigen Luftstromerzeuger sichtbar wird;
**FIG.2****:** eine Ansicht im Längsschnitt zur weiteren Verdeutlichung der Positionierung und Funktionsweise des Luftstromerzeugers und einem erfindungsgemäßen Führungselement;
**FIG.3****:** eine erfindungsgemäße Bindeeinheit mit dazugehörigem Luftstromerzeuger und erfindungsgemäßem Führungselement zum Entfernen von unerwünschtem Material.

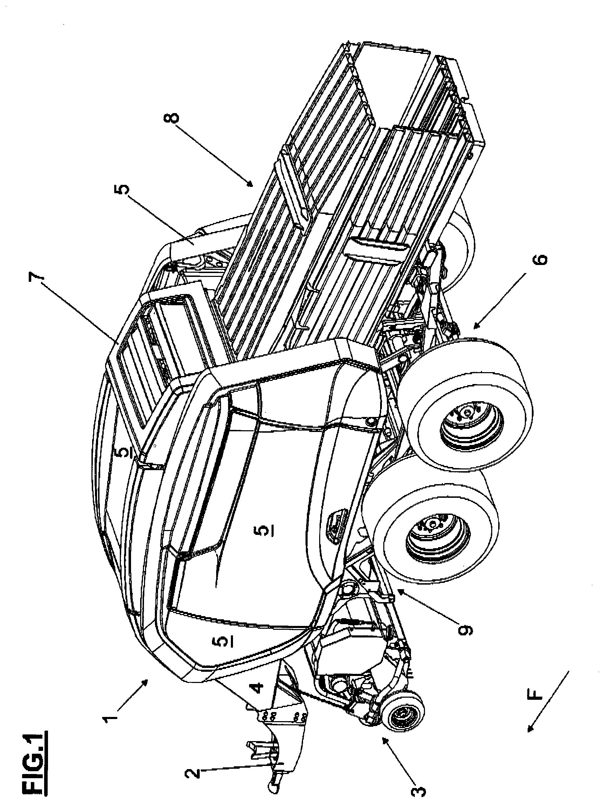

In **FIG.1** wird eine landwirtschaftliche Großpackenpresse 1 gemäß der Erfindung. Zunächst lässt sich ein aus dem Stand der Technik vertrauter Aufbau mit einer Zugdeichsel 2 und einer darauf folgenden Aufnahmevorrichtung 3 erkennen. Durch diese Zugdeichsel 2 ist eine Zugmaschine in der Lage, die landwirtschaftliche Großpackenpresse 1 anzuhängen und über den Feldboden B in Fahrtrichtung F zu bewegen. Aus Sicherheitsgründen werden die am Maschinenhauptrahmen 4 befindlichen, beweglich angetriebenen Maschinenelemente von Maschinenverkleidungen 5 verdeckt. Nebenbei können die Maschinenverkleidungen 5 optisch ansprechend gestaltet werden, um auch einen ästhetischen Anreiz/eine optische Unterscheidungskraft zu Mitbewerbern anzubieten. Die gesamte Großpackenpresse 1 stützt sich mit Hilfe eines Fahrwerks 6 zum Feldboden B ab. Ebenfalls sichtbar, aber erst in der folgenden Figur genauer erkennbar, sind das Gehäuse 7 für die Bindeeinheit 12 und der Presskanal 8,

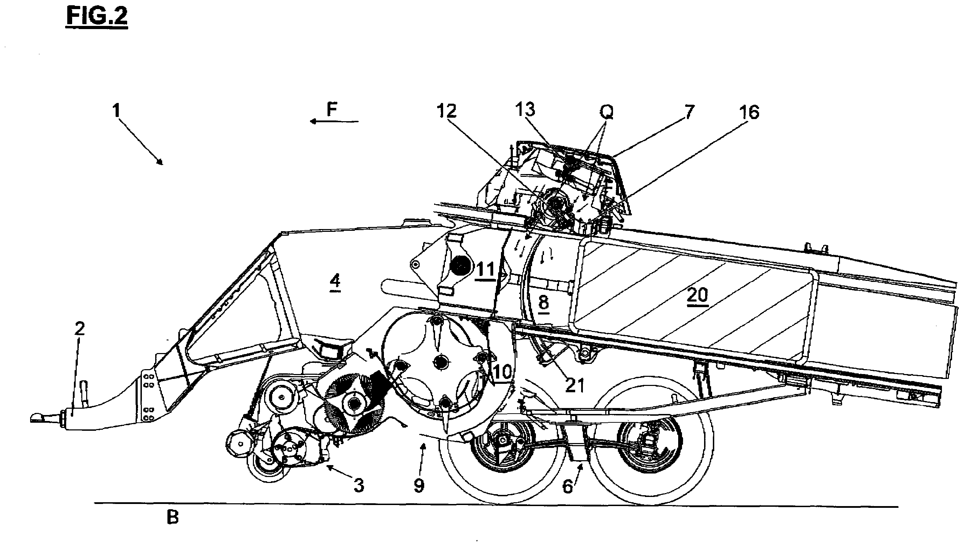

Nachdem das Erntegut von der Aufnahmevorrichtung 3 vom Feldboden B aufgelesen ist, lässt sich durch die **FIG.2** die weitere Funktionsweise nachvollziehen. Eine Fördereinrichtung 9 übernimmt das geborgene Erntegut von der Aufnahmevorrichtung 3 und sammelt es zunächst ein einem Förderkanal 10. In der Darstellung besteht die Fördereinheit aus einem Förderrotor und einer Zinkenraffereinheit. Sobald der Presskolben 11 durch den dazugehörigen Antrieb (nicht dargestellt) im Presskanal 8 nach vorne verfährt, wird durch zumindest einen Teil der Fördereinrichtung 9 das im Förderkanal 10 gesammelte Erntegut in den Presskanal 8 gefördert. Wird der Presskolben 11 jetzt wieder nach hinten bewegt, wird das grade eingeschobene Erntegut im Presskanal 8 zu einem Erntegutballen 20 verdichtet. Der Erntegutballen 20 wird zusätzlich mit Bindematerial umschlungen. Das geschieht, damit der Erntegutballen 20 nach dem Verlassen des Presskanals 8 seine Form nicht verliert und/oder zerfällt. Um das Bindematerial von unterhalb eines zu umschlingenden Erntegutballen 20 hinauf zur oberhalb des Presskanals 8 angeordneten Bindeeinheit 12 zu befördern, werden Elemente zur Bindematerialübergabe 21 eingesetzt. Diese Bindematerialübergabe 21 wird für gewöhnlich als "Nadel" bezeichnet, da sie das Bindematerial, zumeist also einen Garnfaden durch den Presskanal 8 durchreicht. Zur besseren Übersicht ist an dieser Stelle die Maschinenverkleidung 5 weggelassen. Lediglich das Gehäuse 7 des Luftstromerzeugers 13 wird dargestellt.

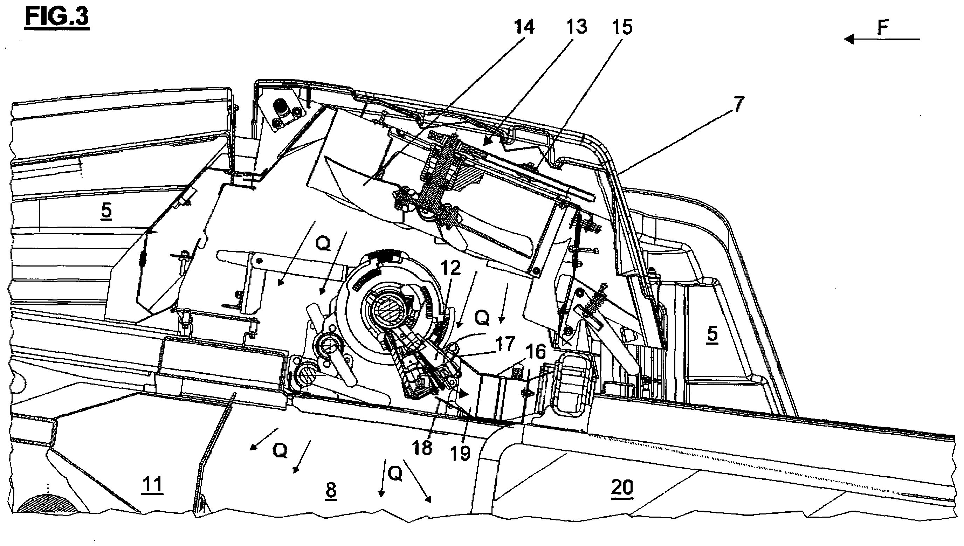

Dieses Gehäuse 7 und die umgebenden Maschinenelemente werden in **Fig.3** in den Fokus gerückt. Durch die Darstellung des erfindungsgemäßen, größtenteils luftdicht ausgeführten Gehäuses 7 und des dazugehörigen Luftstromerzeugers 13, wird auch deutlich, wie der erzeugte Luftstrom Q erfindungsgemäß im Gehäuse 7 auf die Bindeeinheit 12 und die umgebenden Maschinenelemente wirkt. Ein Teil des Luftstroms Q gelangt durch die Aussparungen für die Bindematerialübergabe 21 in den Presskanal 8. Ein weiterer Teil des Luftstroms Q wird durch ein oberes Leltelement 17 des Führungselementes 16 an den Teil der Bindeeinheit 12 gezwungen, an dem ein Bindematerialrest entsteht. Dadurch fördert dieser Teil des erzeugten Luftstroms Q den entstehenden Bindematerialrest auf das untere Leitelement 18 des kanalartigen Führungselements 16 und weiter an die Rückwand des Führungselements 16. Durch den Einsatz weiterer Leitelemente 19 wird der Abtransport der Bindematerialreste durch Leitung des Luftstroms Q im Führungselement 16 begünstigt. Die Bindeeinheit 12 liegt direkt vordem Führungselement 16, sodass auch bei diskontinuierlicher Betätigung des Luftstromerzeugers 13 ein Bindematerialrest zunächst auf dem unteren Leitelement 18 abgelegt werden kann. In jedem Fall fördert der erzeugte Luftstrom Q den abgelegten Bindematerialrest nun aus dem Bereich der Bindeeinheit 12, bzw. aus dem Gehäuse 7. Weiterhin lässt sich erkennen, dass der erzeugte Luftstrom Q durch die unterhalb der Bindeeinheit 12 befindliche Decke des Presskanals 8 gelangen kann. Dadurch können weitere Maschinenelemente positiv von dem Luftstrom Q beeinflusst werden. Beispielsweise kann bei ausreichendem Volumen des Luftstroms Q ein Teil des Presskolbens 11 von Staub oder ähnlichen Fremdkörpern gereinigt werden. Ebenso können Verschmutzungen des Ernteguts vermindert werden, indem Erntegut, welches aus dem Förderkanal 10 in den Presskanal 8 geschoben wird im noch gering verdichteten Zustand durchströmt werden, bevor es durch den Presskolben 11 im Presskanal zu einem Erntegutballen 20 verdichtet wird.

**Bezugszeichenliste:**

| | | | |
|---|---|---|---|
| 1. | Großpackenpresse | Q - | Luftstrom |
| 2. | Zugdeichsel | F - | Fahrtrichtung |
| 3. | Aufnahmevorrichtung | B - | Feldboden |
| 4. | Maschinenhauptrahmen | | |
| 5. | Maschinenverkleidung | | |
| 6. | Fahrwerk | | |
| 7. | Gehäuse | | |
| 8. | Presskanal | | |
| 9. | Fördereinrichtung | | |
| 10. | Förderkanal | | |
| 11. | Presskolben | | |
| 12. | Bindeeinheit | | |
| 13. | Luftstromerzeuger | | |
| 14. | Rotorblatt | | |
| 15. | Antrieb | | |
| 16. | Führungselement | | |
| 17. | Oberes Leitelement | | |
| 18. | Unteres Leitelement | | |
| 19. | Inneres Leitelement | | |
| 20. | Erntegutballen | | |
| 21. | Bindematerialübergabe (Nadel) | | |

## Patentansprüche

1. Landwirtschaftliche Großpackenpresse (1) mit einem Fahrwerk (6) zum Abstützen der Großpackenpresse (1) auf dem Feldboden (B), einer Aufnahmevorrichtung (3) zum Bergen von auf dem Feldboden (B) liegendem Erntegut, einem Förderkanal (10) mit wenigstens einer Fördereinrichtung (4) zur Beförderung des geborgenen Ernteguts in einen Presskanal (8), in welchem ein hin und her beweglich angetriebener Presskolben (11) dazu ausgelegt ist, das Erntegut zu einem Erntegutballen (20) zu verdichten, mit wenigstens einer dem Presskanal (8) zugeordneten Bindeeinheit (12) zur Umreifung des Erntegutballens (20) mit Bindematerial, sowie wenigstens einem Luftstromerzeuger (13) zur Reinigung der Bindeeinheit (12), wobei der Luftstromerzeuger (13) dazu ausgelegt ist, den bewirkten Luftstrom (Q) über den Bereich der Bindeeinheit (12) hinaus zumindest auf den Übergabebereich zwischen Förderkanal (10) und Presskanal (8) zu richten, **dadurch gekennzeichnet, dass** der Luftstromerzeuger (13) einem Gehäuse (7) zugeordnet ist, das dazu ausgelegt ist, die Bindeeinheit (12) wenigstens teilweise von der Umgebung abzuschirmen, wobei ein Teil des Luftstroms (Q) durch Aussparungen für die Bindematerialübergabe (21) in den Presskanal (8) gelangt, und wobei entweder der Luftstromerzeuger (13) in unmittelbarer Umgebung des die Bindeeinheit (12) umgebenden Gehäuses (7) positioniert ist, oder der Luftstromerzeuger (13) im Gehäuse (7) der Bindeeinheit (12) eingebettet ist.

2. Landwirtschaftliche Großpackenpresse (1) nach Anspruch 1, **dadurch gekennzeichnet, dass** der Luftstromerzeuger (13) einen zumindest größtenteils kontinuierlichen Luftstrom (Q) erzeugt.

3. Landwirtschaftliche Großpackenpresse (1) nach wenigstens einem der vorherigen Ansprüche, **dadurch gekennzeichnet, dass** der Luftstromerzeuger (13) dazu ausgelegt ist, das Volumen des Luftstroms (Q) zu variieren.

4. Landwirtschaftliche Großpackenpresse (1) nach wenigstens einem der vorherigen Ansprüche, **dadurch gekennzeichnet, dass** der variable Luftstrom (Q) durch wenigstens teilweise verstellbare Rotorblätter (14) am Luftstromerzeuger (13) erreicht wird.

5. Landwirtschaftliche Großpackenpresse (1) nach wenigstens einem der vorherigen Ansprüche, **dadurch gekennzeichnet, dass** das Gehäuse (7) derart ausgeführt ist, dass durch den Luftstromerzeuger (13) ein Überdruck innerhalb des Gehäuses (7) geschaffen wird.

6. Landwirtschaftliche Großpackenpresse (1) nach wenigstens einem der vorherigen Ansprüche, **dadurch gekennzeichnet, dass** das Gehäuse (7) gestaltet ist, um den geschaffenen Überdruck zumindest größtenteils in Richtung der Presskammer (8) entweichen zu lassen.

7. Landwirtschaftliche Großpackenpresse (1) nach wenigstens einem der vorherigen Ansprüche, **dadurch gekennzeichnet, dass** der Luftstromerzeuger (13) dazu ausgelegt ist, ausreichend Luftstrom (Q) zu erzeugen, um im Presskanal (8) das aus dem Zuführkanal (10) in den Presskanal (8) geförderte Erntegut wenigstens teilweise von Verunreinigung zu befreien.

8. Landwirtschaftliche Großpackenpresse (1) nach wenigstens einem der vorherigen Ansprüche, **dadurch gekennzeichnet, dass** der Luftstromerzeuger (13) durch wenigstens einen Axiallüfter ausgebildet ist.

## Claims

1. Agricultural large square baler (1), comprising a chassis (6) for supporting the large square baler (1) on the field ground (B); a pick-up device (3) for recovering harvested crops lying on the field ground (B); a conveying channel (10) having at least one conveying means (4) for conveying the recovered harvested crops into a pressing channel (8), in which a reciprocatingly driven plunger (11) is designed to compress the harvested crops into a crop bale (20), having at least one binding unit (12) assigned to the pressing channel (8) for strapping the crop bale (20) with binding material; and at least one airflow generator (13) for cleaning the binding unit (12); the airflow generator (13) being designed to direct the effected airflow (Q) beyond the region of the binding unit (12) at least to the transfer region between the conveying channel (10) and the pressing channel (8), **characterised in that** the airflow generator (13) is associated with a housing (7) which is designed to at least partially shield the binding unit (12) from the surroundings, a portion of the airflow (Q) reaching the pressing channel (8) through cutouts for the transfer (21) of binding material, and the airflow generator (13) either being positioned in the immediate vicinity of the housing (7) surrounding the binding unit (12), or the airflow generator (13) being incorporated in the housing (7) of the binding unit (12).

2. Agricultural large square baler (1) according to claim 1, **characterised in that** the airflow generator (13) generates an at least largely continuous airflow (Q).

3. Agricultural large square baler (1) according to at least one of the preceding claims, **characterised in that** the airflow generator (13) is designed to vary the volume of the airflow (Q).

4. Agricultural large square baler (1) according to at least one of the preceding claims, **characterised in that** the variable airflow (Q) is achieved by at least partially adjustable rotor blades (14) on the airflow generator (13).

5. Agricultural large square baler (1) according to at least one of the preceding claims, **characterised in that** the housing (7) is designed in such a way that excess pressure is created within the housing (7) by the airflow generator (13).

6. Agricultural large square baler (1) according to at least one of the preceding claims, **characterised in that** the housing (7) is designed to let the created excess pressure escape at least largely in the direction of the pressing chamber (8).

7. Agricultural large square baler (1) according to at least one of the preceding claims, **characterised in that** the airflow generator (13) is designed to generate sufficient airflow (Q) to at least partially remove contamination from the harvested crops in the pressing channel (8), which crops are conveyed out of the feed channel (10) into the pressing channel (8).

8. Agricultural large square baler (1) according to at least one of the preceding claims, **characterised in that** the airflow generator (13) is formed by at least one axial fan.

## Revendications

1. Presse agricole à grosses balles (1) comportant un châssis de roulement (6) portant la presse (1) sur le sol (B), un ramasseur (3) pour ramasser les produits de récolte sur le sol (B), un canal de transport (10) ayant au moins une installation d'entraînement (4) pour transférer les produits ramassés dans un canal de presse (8) équipé d'un piston de presse (11) entraîné selon un mouvement de va et vient pour comprimer les produits de récolte et former une balle (20), au moins une unité de nouage (12) installée dans le canal de presse (8) pour entourer la balle (20) avec un lien ainsi qu'au moins un générateur de flux d'air (13) pour nettoyer l'unité de nouage (12),
le générateur de flux d'air (13) étant conçu pour diriger le flux d'air (Q) qu'il produit à travers la zone de l'unité de nouage (12) jusqu'au moins dans la zone de transfert entre le canal de transport (10) et le canal de presse (8),
presse **caractérisée en ce que**
le générateur de flux d'air (13) a un boîtier (7) conçu pour protéger l'unité de nouage (12) au moins en partie par rapport à l'environnement, une partie du flux d'air (Q) arrivant par des dégagements pour le transfert du lien (21) dans le canal de presse (8), et
soit le générateur de flux d'air (13) est placé directement dans l'environnement du boîtier (7) entourant l'unité de nouage (12),
soit le générateur de flux d'air (13) est intégré dans le boîtier (7) de l'unité de nouage (12).

2. Presse agricole à grosse balle (1) selon la revendication 1,
**caractérisée en ce que**
le générateur de flux d'air (13) génère un flux d'air (Q) qui est au moins en partie continu.

3. Presse agricole à grosse balle (1) selon au moins l'une des revendications précédentes,
**caractérisée en ce que**
le générateur de flux d'air (13) est conçu pour faire varier le volume de flux d'air (Q).

4. Presse agricole à grosse balle (1) selon au moins l'une des revendications précédentes,
**caractérisée en ce que**
le flux d'air variable (Q) est obtenu par des pâles de rotor (14) au moins partiellement réglables du générateur de flux d'air (13).

5. Presse agricole à grosse balle (1) selon au moins l'une des revendications précédentes,
**caractérisée en ce que**
le boîtier (7) est réalisé de façon que le générateur de flux d'air (13) crée une surpression dans le boîtier (7).

6. Presse agricole à grosse balle (1) selon au moins l'une des revendications précédentes,
**caractérisée en ce que**
le boîtier (7) est conçu pour laisser s'échapper la surpression créée, au moins en grande partie en direction de la chambre de presse (8).

7. Presse agricole à grosse balle (1) selon au moins l'une des revendications précédentes,
**caractérisée en ce que**
le générateur de flux d'air (13) est conçu pour générer un flux d'air (Q), suffisant, pour enlever au moins en partie les saletés introduites dans le canal de presse (8) par le produit transféré du canal de transport (10) dans le canal de presse (8).

8. Presse agricole à grosse balle (1) selon au moins l'une des revendications précédentes,
**caractérisée en ce que**
le générateur de flux d'air (13) est constitué par au moins un ventilateur axial.
